**Europäisches Patentamt**

**European Patent Office**

**Office européen des brevets**

(19)

(11) Veröffentlichungsnummer: **0 042 563**
A1

(12) # EUROPÄISCHE PATENTANMELDUNG

(21) Anmeldenummer: 81104576.4

(22) Anmeldetag: 13.06.81

(51) Int. Cl.³: **B 60 P 7/13**

(30) Priorität: 24.06.80 DE 3023514

(43) Veröffentlichungstag der Anmeldung:
30.12.81 Patentblatt 81/52

(84) Benannte Vertragsstaaten:
AT CH FR IT LI

(71) Anmelder: Waggonfabrik Talbot
Jülicher Strasse 213-237
D-5100 Aachen(DE)

(72) Erfinder: Kunze, Karl Werner, Dipl.-Ing
Jülicher Strasse 228
D-5100 Aachen(DE)

(72) Erfinder: Rohé, Josef
Ambrosiusstrasse 42
D-5100 Aachen(DE)

(72) Erfinder: Strauch, Hans-Wilhelm
Talstrasse 5
D-5102 Würselen(DE)

(74) Vertreter: Stenger, Alex, Dipl.-Ing. et al,
Patentanwälte Dipl.-Ing. A. Stenger Dipl.-Ing. W.
Watzke, Dipl.-Ing. H.J. Ring Kaiser-Friedrich-Ring 70
D-4000 Düsseldorf 11(DE)

(54) Vorrichtung zur Verriegelung von Containern oder Wechselaufbauten auf Tragfahrzeugen o. dgl.

(57) Vorrichtung zur Verriegelung von Containern oder Wechselaufbauten auf Tragfahrzeugen o.dgl. mittels in Beschläge der Container oder Wechselaufbauten eingreifender Riegelzapfen, die mit Einführschrägen zum Einfädeln in die Beschläge sowie mit Hinterschneidungen zum Festhalten der Beschläge gegen Abheben versehen und jeweils in einem am Tragfahrzeug angeordneten Gehäuse unverdrehbar, jedoch zwischen einer Arbeitsstellung und einer vollständig im Gehäuse versenkten Ruhestellung axial verschiebbar gelagert sind. Um eine selbsttätige Bereitstellung der auf dem Tragfahrzeug angeordneten Riegelzapfen für alle möglichen Beladeanordnungen zu schaffen und alle statischen und dynamischen Anforderungen zu erfüllen, ist jeder Riegelzapfen (3) in seiner Arbeitsstellung durch eine Federanordnung (5,8) belastet, die ausgehend von der Arbeitsstellung des Riegelzapfens (3) auf einem kurzen Anfangshub (a) eine hohe Federkraft $(f_5 + f_8)$ und auf dem restlichen Hub (b) bis zur Ruhestellung eine niedrigere Rückstellkraft $(f_5)$ erzeugt. Die Federanordnung wird durch zwei parallelgeschaltete Federn (5,8) gebildet, von denen die eine Feder mit hoher Federkraft (Vorspannfeder 8) nach dem Anfangshub (a) blockiert ist und die andere Feder mit geringerer Federkraft (Rückstellfeder 5) auf dem restlichen Hub (b) allein wirksam ist.

Fig. 1

- 1 -

Vorrichtung zur Verriegelung von Containern oder
Wechselaufbauten auf Tragfahrzeugen o.dgl.

Die Erfindung betrifft eine Vorrichtung zur Verriegelung
von Containern oder Wechselaufbauten auf Tragfahrzeugen
o.dgl. mittels in Beschläge der Container oder Wechselaufbauten eingreifender Riegelzapfen, die mit Einführschrägen zum Einfädeln in die Beschläge sowie mit Hinterschneidungen zum Festhalten der Beschläge gegen Abheben versehen sind.

Beim Verkehr mit Containern und Wechselaufbauten tritt
beim Umschlag dieser Großbehälter das Problem auf, diese
in der jeweils günstigsten Beladeanordnung auf den Tragfahrzeugen festzulegen. Hierzu dienen Riegelzapfen, die
mit Einführschrägen zum Einfädeln in die Beschläge der
Container oder Wechselaufbauten sowie mit Hinterschneidungen zum Festhalten der Beschläge gegen Abheben versehen sind. Entsprechend den jeweiligen Abmessungen der
Container oder Wechselaufbauten müssen am Tragfahrzeug
Riegelzapfen bereitgestellt werden, auf welche die Container oder Wechselaufbauten über Krananlagen oder mittels Greiffahrzeugen von oben her aufgesetzt werden.

Außer in Längsrichtung der Tragfahrzeuge über einen bestimmten Bereich verschiebbaren und bei Nichtbedarf seitlich wegschwenkbaren Riegelzapfen sind Riegelzapfen bekannt, die in einem am Tragfahrzeug angeordneten Gehäuse zwischen einer Arbeitsstellung und einer vollständig im Gehäuse versenkten Ruhestellung axial verschiebbar gelagert sind. Diese wegen der Zuordnung der Hinterschneidungen zu den Beschlägen der Container oder Wechselaufbauten unverdrehbar im Gehäuse gehaltenen Riegelzapfen sind an allen denjenigen Stellen des Tragfahrzeuges angeordnet, die für eine Verriegelung eines Beschlages eines Containers oder Wechselaufbaus in Frage kommen. Bei Bedarf werden die Riegel aus der im Gehäuse versenkten Ruhestellung von Hand herausgehoben und mittels eines Querbolzens in der Arbeitsstellung festgelegt.

Bei beiden bekannten Konstruktionen ist es somit erforderlich, daß die jeweils benötigte Anzahl von Riegelzapfen an den jeweils erforderlichen Stellen des Tragfahrzeuges in die Arbeitsposition gebracht werden. Fehlende Riegelzapfen ergeben eine unzureichende Sicherung der Großbehälter auf dem Tragfahrzeug. In der Arbeitsposition befindliche überzählige Riegelzapfen führen dagegen zu einer Beschädigung der Großbehälter und der Riegelzapfen, weil sie beim Absenken des Containers oder Wechselaufbaus auf das Tragfahrzeug in dessen Unterseite eindringen, wobei nicht nur Beschädigungen auftreten können, sondern auch eine unvollständige Verriegelung des jeweiligen Großbehälters mit dem Tragfahrzeug nicht ausgeschlossen werden kann.

Der Erfindung liegt die Aufgabe zugrunde, eine Vorrichtung zur Verriegelung von Containern oder Wechselaufbau-

- 3 -

ten auf Tragfahrzeugen gemäß der eingangs beschriebenen
Art zu schaffen, die zur Automatisierung des Ladevorganges unabhängig vom jeweiligen Umladegerät sowie von
der Tragfahrzeugkonstruktion eine selbsttätige Bereitstellung der auf dem Tragfahrzeug an allen in Frage
kommenden Stellen angeordneten Riegelzapfen für alle
möglichen Beladeanordnungen ergibt und selbst unter den
erschwerten Bedingungen des Eisenbahnbetriebes alle
statischen und dynamischen Anforderungen erfüllt.

Die Lösung dieser Aufgabenstellung durch die Erfindung
ist dadurch gekennzeichnet, daß jeder Riegelzapfen in
seiner Arbeitsstellung durch eine Federanordnung belastet ist, die ausgehend von der Arbeitsstellung des
Riegelzapfens auf einem kurzen Anfangshub eine hohe Federkraft und auf dem restlichen Hub bis zur Ruhestellung
eine niedrigere Rückstellkraft erzeugt.

Durch diese erfindungsgemäße Ausbildung wird erreicht,
daß beim Absetzen eines Containers oder Wechselaufbaus
auf ein Tragfahrzeug von sämtlichen in der Arbeitsstellung befindlichen Riegelzapfen diejenigen, die sich im
Bereich des Containers oder Wechselaufbaus befinden und
nicht zu dessen Verriegelung benötigt werden, durch den
Container oder den Wechselaufbau in ihre Ruhestellung
im Gehäuse zurückgedrückt werden. Hierzu ist nach Überwinden einer höheren Federkraft im Bereich eines kurzen
Anfangshubes nur die jeweilige Rückstellkraft zu überwinden. Die höhere Federkraft in dem 10 bis 20% des
Gesamthubes betragenden Anfangshub bewirkt, daß zur
Verriegelung des Containers oder Wechselaufbaus benötigte Riegelzapfen nicht durch ungenaues oder schräges
Aufsetzen der Beschläge weggedrückt werden können. Die
Federkraft ist jedoch derart bemessen, daß Beschädigungen an den Containern oder Wechselaufbauten ausgeschlossen sind. Durch die Rückstellkraft wird nicht nur sichergestellt, daß nach Abnehmen der Container oder Wechselaufbauten vom Tragfahrzeug sämtliche Riegelzapfen in ihre Arbeitsposition zurückkehren, sondern daß auch auf dem restlichen Hub auftretende Verkantungen oder Reibkräfte den Riegelzapfen nicht dauerhaft aus seiner benötigten Arbeitsstellung ganz oder teilweise in das Gehäuse zurückdrücken können.

Die erfindungsgemäße Vorrichtung schafft somit eine Steuerung der auf den Tragfahrzeugen angeordneten Riegelzapfen unmittelbar von den jeweils festzulegenden Containern oder Wechselaufbauten, so daß unabhängig vom Umladegerät und von der Tragwagenkonstruktion für alle vorkommenden und denkbaren Beladeanordnungen eine Automatisierung des Ladevorganges möglich wird, welche die bei den bekannten Vorrichtungen erforderliche manuelle Bereitstellung der Riegelzapfen entsprechend der jeweiligen Beladeanordnung überflüssig macht und demgemäß nicht nur die Bereitstellung von Bedienungspersonal verringert, sondern auch Fehlbedienungen ausschließt und insgesamt den Umladevorgang erheblich verkürzt.

Gemäß einem weiteren Merkmal der Erfindung ist die Federanordnung durch zwei parallelgeschaltete Federn gebildet, von denen die eine Feder mit hoher Federkraft nach dem Anfangshub blockiert ist und die andere Feder mit geringerer Federkraft auf dem restlichen Hub allein wirksam ist. Durch diese erfindungsgemäße Verwendung zweier Federn läßt sich auf einfache Weise der über den Gesamthub unterschiedliche Federkraftverlauf erreichen, wobei es möglich ist, die unterschiedlichen Federkräfte unabhängig voneinander zu wählen.

0042563

Bei einer bevorzugten Ausführungsform der Erfindung ist der Riegelzapfen auf einem im Gehäuse geführten Lagerstück befestigt, an dem die am Gehäuse abgestützte Rückstellfeder unmittelbar angreift, wogegen die Vorspannfeder zwischen dem Gehäuse und einem Zwischenstück angeordnet ist, das im Bereich des Anfangshubes mit dem Lagerstück und im Bereich des restlichen Hubes mit dem Gehäuse gekuppelt ist. Diese besonders einfache Konstruktion wird erfindungsgemäß dadurch weitergebildet, daß das Lagerstück büchsenförmig mit auf dem Boden befestigtem Riegelzapfen ausgebildet, die Rückstellfeder in einem Ringraum zwischen Lagerstück und Gehäuse untergebracht und das Zwischenstück kolbenartig im Innern des Lagerstückes angeordnet ist, in welches ein das untere Ende der Vorspannfeder abstützendes Rohrstück hineinragt. Hierdurch wird eine einfache und kostengünstige Konstruktion mit der auch für den rauhen Eisenbahnbetrieb erforderlichen Robustheit geschaffen.

Die Blockierung der auf dem Anfangshub wirksamen Vorspannfeder kann gemäß einem weiteren Merkmal der Erfindung dadurch erzielt werden, daß in Radialbohrungen des Zwischenstückes Sperrkugeln angeordnet sind, die im Bereich des Anfangshubes in Ausnehmungen im Lagerstück und im Bereich des restlichen Hubes in Ausnehmungen des Rohrstückes eingreifen. Mittels dieser Sperrkugeln wird somit in Abhängigkeit vom jeweiligen Hubbereich eine Kupplung des Zwischenstückes einerseits mit dem Lagerstück und andererseits mit dem Rohrstück bewirkt.

Um die Herstellung und Unterbringungsmöglichkeit der Vorrichtung zu vereinfachen, wird mit der Erfindung weiterhin vorgeschlagen, das Gehäuse, das Lagerstück, das Zwischenstück und das Rohrstück mit kreisförmigem Querschnitt auszuführen und das Lagerstück über einen

- 6 -

radial angeordneten, in einen axialen Schlitz des Gehäuses eingreifenden Bolzen gegen Verdrehen zu sichern.
Die Federn werden hierbei vorzugsweise als Wendelfedern ausgebildet. Das Gehäuse, das Lagerstück mit dem
Riegelzapfen und das Rohrstück können einstückig aus
Gußstahl hergestellt werden.

Insgesamt ergibt sich mit der erfindungsgemäßen Vorrichtung ein mechanisch arbeitendes Gerät, welches ein vollautomatisches Auf- und Absetzen von Containern und Wechselaufbauten auf Tragfahrzeugen gestattet, wobei der
Antrieb für die Verstellung der jeweiligen Riegelzapfen
durch die Masse der Container bzw. Wechselaufbauten ohne
jegliche Fremdenergie und unabhängig vom Ladegerät erfolgt. Es entfällt somit nicht nur ein zusätzlicher
Zeitaufwand für das Positionieren der Riegelzapfen und
damit eine Verkürzung der Umschlagzeit, sondern auch eine
Vermeidung von Fehlbedienungen und unbeabsichtigten Be-
Beschädigungen.

Die erfindungsgemäße Vorrichtung kann sowohl bei Schienen- und Straßenfahrzeugen für den Transport von Containern und Wechselaufbauten, als auch an Fahrzeugen für
den kombinierten Verkehr sowie an Tragrahmen für den Umschlag von Gruppen gleicher oder verschiedenartiger Container oder Wechselaufbauten angewendet werden.

Auf der Zeichnung ist ein Ausführungsbeispiel der erfindungsgemäßen Vorrichtung dargestellt, und zwar zeigen:

Fig. 1        einen senkrechten Schnitt durch die Vorrichtung mit in der Arbeitsstellung befindlichem, in einen Beschlag eingreifenden
              Riegelzapfen,

Fig. 2          eine Seitenansicht zu Fig. 1,

Fig. 3          einen der Fig. 1 entsprechenden Längsschnitt mit in der Ruhestellung befindlichem Riegelzapfen und

Fig. 4          ein Diagramm der Federkennlinie der beim
                Ausführungsbeispiel nach den Figuren 1
                bis 3 verwendeten Federanordnung.


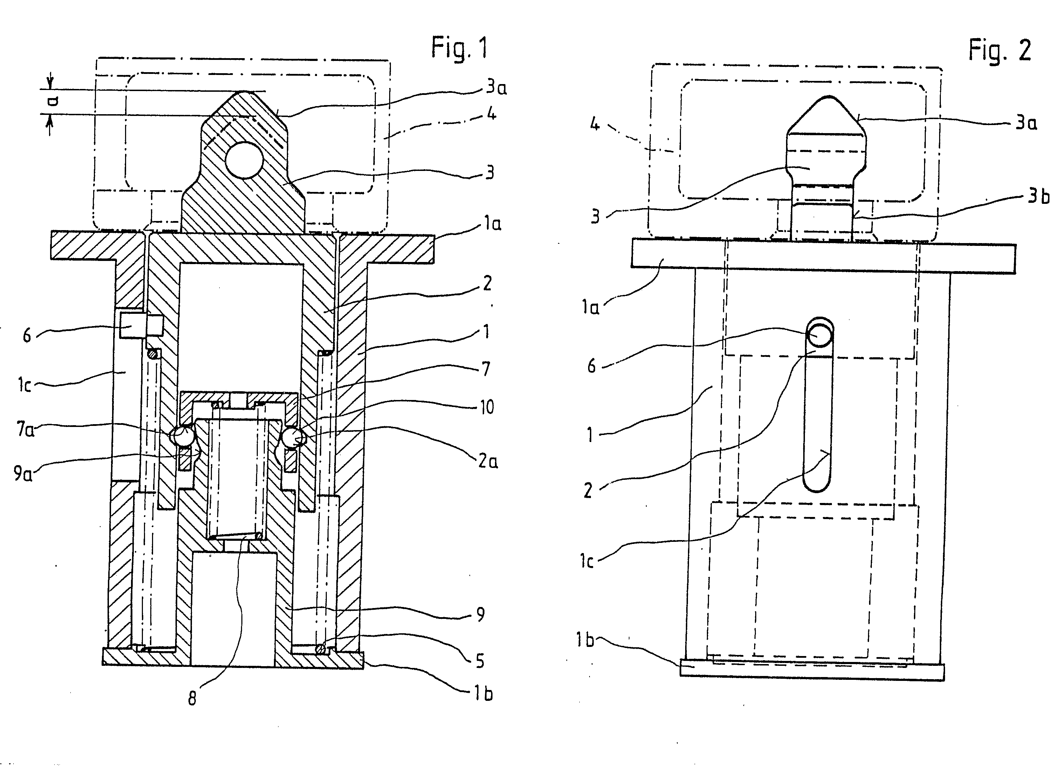

Das in den Figuren 1 bis 3 dargestellte Ausführungsbeispiel zeigt ein im wesentlichen zylindrisches Gehäuse
1, das an seinem oberen Ende mit einem Befestigungsflansch 1a zum Einbau in ein Tragfahrzeug oder einen
Tragrahmen versehen ist. Im Gehäuse 1 ist ein büchsenförmiges Lagerstück 2 axial verschiebbar angeordnet,
auf dessen Boden ein Riegelzapfen 3 befestigt ist. Dieser Riegelzapfen 3 besitzt Einführschrägen 3a zum Einfädeln des Riegelzapfens 3 in die Beschläge eines Containers oder Wechselaufbaus sowie Hinterschneidungen 3b
zum Festhalten dieser Beschläge gegen ein Abheben. In
den Figuren 1 und 2 ist mit strichpunktierten Linien
ein Eckbeschlag 4 eines Containers angedeutet.


Zwischen dem Lagerstück 2 und einem am unteren Ende des
Gehäuses 1 befestigten Boden 1b ist eine wendelförmige
Rückstellfeder 5 angeordnet, die das Lagerstück 2 und
damit den Riegelzapfen 3 ständig in Richtung seiner Arbeitsstellung belastet, die in den Figuren 1 und 2 dargestellt ist. Um ein Verdrehen des Lagerstückes 2 mit
dem Riegelzapfen 3 innerhalb des zylindrischen Gehäuses
1 zu verhindern, weil hierdurch insbesondere die Hinterschneidungen 3b des Riegelzapfens 3 aus ihrer wirksamen
Stellung gelangen würden, ist im Lagerstück 2 ein radial
nach außen ragender Bolzen 6 angeordnet, der in einen
axialen Schlitz 1c des Gehäuses 1 eingreift, so daß das Lagerstück 2 zwar in axialer Richtung im Gehäuse 1 verschoben werden kann, jedoch gegen Verdrehungen gesichert ist.

Im Inneren des büchsenförmig ausgebildeten Lagerstückes 2 ist ein kolbenartiges Zwischenstück 7 angeordnet, an dessen Boden sich das obere Ende einer Vorspannfeder 8 abstützt. Diese beim Ausführungsbeispiel ebenfalls als Wendelfeder ausgebildete Vorspannfeder 8 stützt sich mit ihrem unteren Ende an einem Rohrstück 9 ab, das ausgehend vom Boden 1b des Gehäuses 1 nach oben in das Lagerstück 2 hineinragt. Beim dargestellten Ausführungsbeispiel ist das Rohrstück 9 einstückig mit dem Boden 1b des Gehäuses 1 ausgeführt.

Im Zwischenstück 7 sind mehrere Sperrkugeln 10 angeordnet, und zwar in Radialbohrungen 7a. Diese Sperrkugeln 10 können einerseits in Ausnehmungen in Form einer Ringnut 2a in das Lagerstück 2 eingreifen und andererseits in eine Ringnut 9a, die im Rohrstück 9 ausgebildet ist.

Die voranstehend in ihrem Aufbau beschriebene Vorrichtung ist an allen denjenigen Stellen eines Tragfahrzeuges angeordnet, an denen ein Riegelzapfen 3 bei unterschiedlichsten Ladungsanordnungen zur Verriegelung eines Eckbeschlages 4 mit dem Tragfahrzeug benötigt werden kann. Solange keine Container oder Wechselaufbauten auf dem Tragfahrzeug angeordnet sind, befinden sich die sowohl durch die Vorspannfeder 8 als auch durch die Rückstellfeder 5 belasteten Lagerstücke 2 mit den Riegelzapfen 3 in der in den Figuren 1 und 2 dargestellten Arbeitsstellung.

Wird nunmehr ein Container oder ein Wechselaufbau mit seinem Eckbeschlag 4 von oben her auf einen Riegelzapfen 3 aufgesetzt, sorgen dessen Einführschrägen 3a dafür, daß der Riegelzapfen 3 in das Innere des Eckbeschlages 4 gelangt. Hierbei etwa durch Verkantungen auftretende Belastungen des Riegelzapfens 3 führen trotz der verschiebbaren Anordnung des Lagerstückes 2 im Gehäuse 1 nicht zu einer dauerhaften Verschiebung des Riegelzapfens 2 in das Innere des Gehäuses 1, weil die sich addierenden Kräfte der Rückstellfeder 5 und Vorspannfeder 8 dafür sorgen, daß der Riegelzapfen 3 stets in seine Arbeitsstellung zurückkehrt, in welcher die Hinterschneidungen 3b des Riegelzapfens 3 dafür sorgen, daß ein ordnungsgemäß aufgesetzter Container oder Wechselaufbau nicht unbeabsichtigt verschoben oder abgehoben werden kann. In der Arbeitsstellung greifen gemäß Fig. 1 die Sperrkugeln 10 in die Ringnut 2a des Lagerstückes 2 ein, weil sie von der Außenwand des Rohrstückes 9 radial nach außen gedrückt werden.

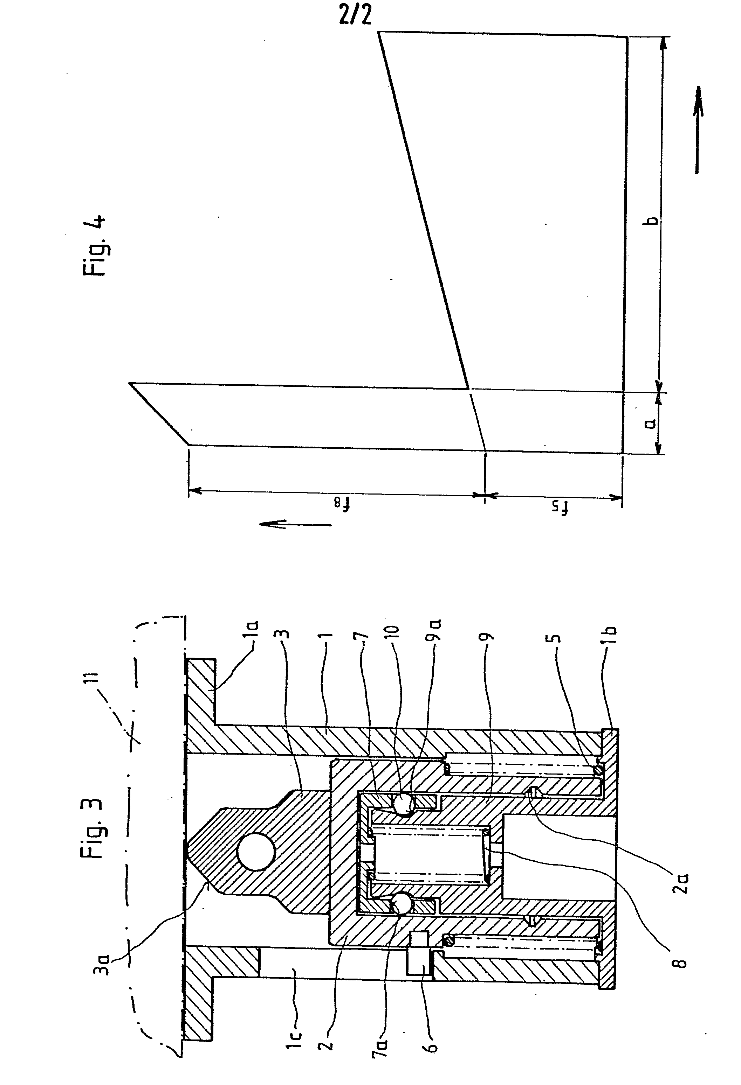

Wird dagegen ein Riegelzapfen 3 durch einen in Fig. 3 mit strichpunktierten Linien angedeuteten Rahmen 11 eines Containers oder Wechselaufbaus belastet, gelangt er in die in Fig. 3 dargestellte Ruhestellung innerhalb des Gehäuses 1. Hierzu ist es erforderlich, daß auf einem Anfangshub a, der beim dargestellten Ausführungsbeispiel etwa 10 mm beträgt, die Kraft der Vorspannfeder 8 überwunden wird. Die anfängliche Federkraft $f_8$ dieser Vorspannfeder 8 ist in dem Diagramm gemäß Fig. 4 eingezeichnet. Zu dieser Federkraft $f_8$ der Vorspannfeder 8 kommt die anfängliche Federkraft $f_5$ der Rückstellfeder 5 hinzu, wie dies ebenfalls aus Fig. 4 zu ersehen ist. Da beide Federkräfte $f_5$ und $f_8$ mit zunehmendem Federweg ansteigen, ergibt sich insgesamt eine steigende Federkraft, die auf dem Anfangshub a des Riegelzapfens 3 bei seiner Bewegung aus der Arbeitsstellung in seine Ruhestellung überwunden werden muß.

Sobald der Anfangshub a zurückgelegt worden ist, gelangen die Sperrkugeln 10 in den Bereich der Ringnut 9a des Rohrstückes 9, so daß die Sperrkugeln 10 durch die Schrägen der im Lagerstück 2 ausgebildeten Ringnut 2a radial nach innen weggedrückt werden. Hierdurch ergibt sich eine Verriegelung des Zwischenstückes 7 am Rohrstück 9, so daß nach Zurücklegen des Anfangshubes a die Wirkung der Vorspannfeder 8 über das Zwischenstück 7 und die Sperrkugeln 10 auf das Lagerstück 2 und damit den Riegelzapfen 3 unterbrochen wird. Die Vorspannfeder 8 ist blockiert, so daß auf dem restlichen Hub b, der beim Ausführungsbeispiel 90 mm beträgt, nur die Rückstellfeder 5 das Lagerstück 2 und damit den Riegelzapfen 3 belastet. Die Federkennlinie dieser Rückstellfeder 5 ist ebenfalls in Fig. 4 eingezeichnet. Allein diese Rückstellkraft der Rückstellfeder 5 wirkt in der in Fig. 3 dargestellten Ruhestellung auf den Riegelzapfen 3, so daß dieser nach einer anfänglich hohen Federkraft den ihn zurückdrückenden Rahmen 11 eines Containers nur mäßig belastet, andererseits nach Wegnahme des Containers mit Sicherheit in seine Arbeitsstellung zurückkehrt.

Das in Fig. 4 dargestellte Diagramm, das die Federkraft der Federn 5 und 4 über den Federweg, d.h. den Hub des Riegelzapfens 3 zeigt, läßt somit deutlich erkennen, daß nach einer hohen Federkraft auf einem kurzen Anfangshub a der Riegelzapfen 3 auf dem restlichen Hub b bis zur Ruhestellung nur mit einer niedrigeren Rückstellkraft belastet ist. Hierdurch stellen die unmittel-

- 11 -

bar durch den Container oder den Wechselaufbau zurückgedrückten, nicht benötigten Riegelzapfen 3 nur
eine geringe Belastung für den Container bzw. Wechselaufbau dar, während andererseits zum Einfädeln der
benötigten Riegelzapfen 3 in Eckbeschläge 4 verhältnismäßig hohe Rückstellkräfte der Vorspannfeder 8 zur
Verfügung stehen, die ein unbeabsichtigtes Zurückdrücken
der Riegelzapfen 3 verhindern.

0042563

- 12 -

Bezugsziffernliste:

| | |
|---|---|
| 1 | Gehäuse |
| 1a | Befestigungsflansch |
| 1b | Boden |
| 1c | Schlitz |
| 2 | Lagerstück |
| 2a | Ringnut |
| 3 | Riegelzapfen |
| 3a | Einführschräge |
| 3b | Hinterschneidung |
| 4 | Eckbeschlag |
| 5 | Rückstellfeder |
| 6 | Bolzen |
| 7 | Zwischenstück |
| 7a | Radialbohrung |
| 8 | Vorspannfeder |
| 9 | Rohrstück |
| 9a | Ringnut |
| 10 | Sperrkugel |
| 11 | Rahmen |

| | |
|---|---|
| a | Anfangshub |
| b | restlicher Hub |
| $f_5$ | Federkraft der Feder 5 |
| $f_8$ | Federkraft der Feder 8 |

Ansprüche:

1. Vorrichtung zur Verriegelung von Containern oder Wechselaufbauten auf Tragfahrzeugen o.dgl. mittels in Beschläge der Container oder Wechselaufbauten eingreifender Riegelzapfen, die mit Einführschrägen zum Einfädeln in die Beschläge sowie mit Hinterschneidungen zum Festhalten der Beschläge gegen Abheben versehen und jeweils in einem am Tragfahrzeug angeordneten Gehäuse unverdrehbar, jedoch zwischen einer Arbeitsstellung und einer vollständig im Gehäuse versenkten Ruhestellung axial verschiebbar gelagert sind, d a d u r c h  g e k e n n z e i c h n e t, daß jeder Riegelzapfen (3) in seiner Arbeitsstellung durch eine Federanordnung (5, 8) belastet ist, die ausgehend von der Arbeitsstellung des Riegelzapfens (3) auf einem kurzen Anfangshub (a) eine hohe Federkraft $(f_5 + f_8)$ und auf dem restlichen Hub (b) bis zur Ruhestellung eine niedrigere Rückstellkraft $(f_5)$ erzeugt.

2. Vorrichtung nach Anspruch 1, dadurch gekennzeichnet, daß die Federanordnung durch zwei parallelgeschaltete Federn (5, 8) gebildet ist, von denen die eine Feder mit hoher Federkraft (Vorspannfeder 8) nach dem Anfangshub (a) blockiert ist und die andere Feder mit geringerer Federkraft (Rückstellfeder 5) auf dem restlichen Hub (b) allein wirksam ist.

3. Vorrichtung nach Anspruch 1 und 2, dadurch gekennzeichnet, daß der Riegelzapfen (3) auf einem im Gehäuse (1) geführten Lagerstück (2) befestigt ist, an dem die am Gehäuse (1) abgestützte Rückstellfeder (5) unmittelbar angreift, wogegen die Vorspannfeder (8) zwischen dem Gehäuse (1) und einem
Zwischenstück (7) angeordnet ist, das im Bereich des
Anfangshubes (a) mit dem Lagerstück (2) und im Bereich des restlichen Hubes (b) mit dem Gehäuse (1)
gekuppelt ist.

4. Vorrichtung nach den Ansprüchen 1 bis 3, dadurch
gekennzeichnet, daß das Lagerstück (2) büchsenförmig
mit auf dem Boden befestigten Riegelzapfen (3) ausgebildet, die Rückstellfeder (5) in einem Ringraum
zwischen Lagerstück (2) und Gehäuse (1) untergebracht
und das Zwischenstück (7) kolbenartig im Inneren des
Lagerstückes (2) angeordnet ist, in welches ein das
untere Ende der Vorspannfeder (8) abstützendes Rohrstück (9) hineinragt.

5. Vorrichtung nach den Ansprüchen 1 bis 4, dadurch gekennzeichnet, daß in Radialbohrungen (7a) des Zwischenstückes (7) Sperrkugeln (10) angeordnet sind, die
im Bereich des Anfangshubes (a) in Ausnehmungen (2a)
im Lagerstück (2) und im Bereich des restlichen Hubes
(b) in Ausnehmungen (9a) des Rohrstückes (9) eingreifen.

6. Vorrichtung nach den Ansprüchen 1 bis 5, dadurch gekennzeichnet, daß das Gehäuse (1), das Lagerstück
(2), das Zwischenstück (7) und das Rohrstück (9) mit
kreisförmigem Querschnitt ausgeführt sind und daß das
Lagerstück (2) über einen radial angeordneten, in
einen axialen Schlitz (1c) des Gehäuses (1) eingreifenden Bolzen (6) gegen Verdrehen gesichert ist.

- 15 -

7. Vorrichtung nach mindestens einem der Ansprüche 1 bis 6, dadurch gekennzeichnet, daß die Federn (5,8) als Wendelfedern ausgebildet sind.

8. Vorrichtung nach mindestens einem der Ansprüche 1 bis 7, dadurch gekennzeichnet, daß das Gehäuse (1), das Lagerstück (2) mit Riegelzapfen (3) und das Rohrstück (9) mit Boden (1b) einstückig aus Gußstahl hergestellt sind.

Fig. 2

Fig. 1

Fig. 3

Fig. 4

2/2

0042563

Europäisches
Patentamt.

## EUROPÄISCHER RECHERCHENBERICHT

| KLASSIFIKATION DER ANMELDUNG (Int. Cl.³) |
|---|
| B 60 P 7/13 |

### EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | DE - A - 2 302 392 (WERKZEUGMASCHI-NENKOMBINAT) <br><br> * Patentansprüch 1; Seite 5; Figur 1 * <br><br> -- | 1,5,7 |
| A | US - A - 1 404 464 (MEYER) <br><br> * das ganze Dokument * <br><br> -- | 1 |
| A | DE - C - 804 874 (HUTTER) <br><br> * Patentanspruch 1 * <br><br> -- | 1 |
| A | GB - A - 1 199 594 (HOLT) <br><br> * Patentanspruch 1; Figur 1 * <br><br> ----------- | 1 |

**RECHERCHIERTE SACHGEBIETE (Int. Cl.³)**

B 60 P
F 16 F
B 61 D
B 63 B

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort <br> Den Haag | Abschlußdatum der Recherche <br> 17-09-1981 | Prüfer <br> SCHMITTER |
|---|---|---|

EPA form 1503.1   06.78